# EUROPEAN PATENT APPLICATION

(11) **EP 4 428 787 A1**
(43) Date of publication of application: **11.09.2024**
(21) Application number: 24160648.2
(22) Date of filing: 29.02.2024
(51) Int. Cl.: G06Q 10/0631

(54) **AUTOMATED FLIGHT TRAINING AND SCHEDULING**

(30) Priority: 06.03.2023 US 202318179308
(71) Applicant: The Boeing Company, Arlington, VA 22202 (US)
(72) Inventor: BALAKRISHNAN, Prakash, Arlington, 22202 (US); NEELAKANTHA, Shreelakshmi Birur, Arlington, 22202 (US); JOHANSSON, Niklas, Arlington, 22202 (US)
(74) Representative: Morrall, Jonathan Ian McLachlan

(57) **Abstract**

The present disclosure provides techniques for scheduling and monitoring of event progress. A syllabus indicating flight training requirements for pilots and flight information for a plurality of scheduled flights is accessed. A first set of flight alternatives, from the plurality of scheduled flights, is identified, for a first trainee, based on the syllabus. The first trainee is assigned to a first subset of one or more flights, from the first set of flight alternatives, based on defined scheduling criteria. One or more instructors are assigned to each flight of the first subset of one or more flights.

## Description

### FIELD

Aspects of the present disclosure relate to flight training. More particularly, the present disclosure relates to automated scheduling and monitoring of flight training.

### BACKGROUND

Learning to pilot airplanes (particularly in the case of commercial flying) is highly complex and time consuming. Generally, commercial pilots must train or certify for each specific type of aircraft individually, in addition to their general flight training. For example, when beginning their career or when transitioning from a first model of plan to a second (e.g., a larger or smaller plane, a different manufacturer, and the like), pilots must generally undergo a sequence of training events to ensure they can safely pilot the craft. In many cases, this training sequence includes one or more actual flights, where the trainee assists with or pilots the flight under supervision of an instructor.

In conventional systems, these training sequences are defined and monitored manually, requiring substantial oversight and effort. As a result, certifying a pilot for a new aircraft generally consumes substantial time and frequent error (e.g., performing a given training flight twice, or skipping a training flight and returning to it at a later date).

### SUMMARY

In one aspect of the present disclosure, a method is provided. The method includes: accessing a syllabus indicating flight training requirements for pilots; accessing flight information for a plurality of scheduled flights; identifying, for a first trainee, a first set of flight alternatives, from the plurality of scheduled flights, based on the syllabus; assigning, by operation of one or more computer processors, the first trainee to a first subset of one or more flights, from the first set of flight alternatives, based on defined scheduling criteria; and assigning one or more instructors to each flight of the first subset of one or more flights.

In one aspect, in combination with any example method above or below, the syllabus comprises a sequence of events for flight training for pilots, and each respective event in the sequence of events comprises respective flight information describing a respective flight that trainee pilots must complete during training.

In one aspect, in combination with any example method above or below, assigning the first trainee to the first subset of one or more flights comprises: selecting a first flight, from the first set of flight alternatives, based on a first event in the sequence of events; assigning the first trainee to the first flight; selecting a second flight, from the first set of flight alternatives, based on a second event in the sequence of events, wherein the second flight is subsequent to the first flight; and assigning the first trainee to the second flight.

In one aspect, in combination with any example method above or below, the defined scheduling criteria indicates to minimize time between flights in the first subset of one or more flights.

In one aspect, in combination with any example method above or below, the method further includes, subsequent to assigning the first trainee to the first subset of one or more flights: identifying, for a second trainee, a second set of flight alternatives, from the plurality of scheduled flights, based on the syllabus; and assigning the second trainee to a second subset of one or more flights, from the second set of flight alternatives, based on defined scheduling criteria.

In one aspect, in combination with any example method above or below, the method further comprises tagging each respective flight in the first subset of one or more flights based on the syllabus.

In one aspect, in combination with any example method above or below, assigning the one or more instructors comprises, for each respective flight of the first subset of one or more flights: identifying a respective tag associated with the respective flight; identifying a respective set of instructor alternatives, from a plurality of instructor alternatives, based on the respective tag; and assigning a respective instructor, from the respective set of instructor alternatives, to the respective flight.

The present disclosure provides a system in one aspect. The system includes a processor, a memory storage device including instructions that when executed by the processor enable performance of an operation in accordance with any combination of the above methods.

The present disclosure provides a computer program product in one aspect, the computer program product including a computer-readable storage medium having computer-readable program code embodied therewith, the computer-readable program code executable by one or more computer processors to perform an operation in accordance with any combination of the above methods.

### BRIEF DESCRIPTION OF THE DRAWINGS

So that the manner in which the above recited features can be understood in detail, a more particular description, briefly summarized above, may be had by reference to example aspects, some of which are illustrated in the appended drawings.
Figure 1 depicts an example workflow for automated training flight scheduling.
Figure 2 is a flow diagram depicting an example method for generating automated training schedules.
Figure 3 is a flow diagram depicting an example method for assigning trainee pilot(s) to scheduled flights based on defined syllabi.
Figure 4 is a flow diagram depicting an example method for assigning instructor pilot(s) to scheduled flights based on defined syllabi.
Figure 5 is a flow diagram depicting an example method for generating training schedules.
Figure 6 depicts an example computing device, according to one or more aspects of the present disclosure.

### DETAILED DESCRIPTION

The present disclosure relates to automated flight scheduling and monitoring.

In some aspects, techniques are provided to automatically generate and monitor sequential process schedules, such as the roster planning of an airline flight deck crew for line flying training (e.g., line flying under supervision (LIFUS)) that takes place in an aircraft with a qualified instructor. In some aspects, the system operates as an extended module to a crew rostering system, enabling optimal instructor and trainee planning. As used herein, a "trainee" pilot generally refers to an individual who is seeking to be trained and/or certified to operate a given aircraft type. The trainee pilot may be a new pilot or user (e.g., one not trained or certified to fly any aircraft), or may be a pilot that is currently certified for one or more aircraft and is seeking to add a new aircraft to their skillset. Further, as used herein, an "instructor" pilot generally refers to an individual that is trained and/or certified to operate the given aircraft type, and/or is trained and/or certified to instruct or train others to operate the given aircraft type.

In conventional systems relying on manual assignments, the training schedules are often inadequate or sub-optimal, resulting in added delay and training costs. By using aspects of the present disclosure, the training scheduling can be automated, which reduces manual effort, improves the schedules (e.g., resulting in more optimized schedules), reduces waste and delay, and generally improves the overall functionality of the training pipeline and system.

In some aspects, the system can evaluate training syllabi (also referred to as footprints in some aspects) specifying a sequence of training events (e.g., a sequence of flight characteristics that a trainee must perform). For example, the syllabus may indicate that, to certify for a given aircraft type, the trainee must perform an observation flight (e.g., sitting in the aircraft observing an experienced pilot), one or more flights over designated terrain (e.g., over snow, over difficult terrain such as a mountainous area, over water, and the like), one or more regional/short duration flights, one or more long range/duration flights, and the like. In some aspects, one or more of these events are sequential, such that the trainee must complete a given flight before proceeding to the next.

In some aspects, the syllabus may be manually-specified, and may be specific to a given airline and/or aircraft type. The syllabus may also change over time, such as due to changing regulations or practices, new flight paths or destinations, and the like. In an aspect, a flight scheduling system can ingest these syllabi, and perform automated trainee scheduling. For example, the flight scheduling system may identify future-scheduled flights that would satisfy one or more events in the syllabus, and optimally assign trainees to these flight(s) in a sequence that satisfies the syllabus. The flight scheduling system can similarly assign instructors to the flights based on the syllabus and trainee assignments, ensuring that the training process is completed accurately and quickly.

In an embodiment, by using a sequential optimization, aspects of the present disclosure are able to substantially improve over current manual (and non-sequential) assignment approaches. Further, the automated techniques described herein can substantially reduce error, ensure that trainees are assigned complete and adequate training regimens, and otherwise improve the overall training process. Additionally, the techniques described herein can enable rapid processing and optimal allocation of a large number of trainees (e.g., hundreds or thousands at a time), which is time-prohibitive for conventional approaches.

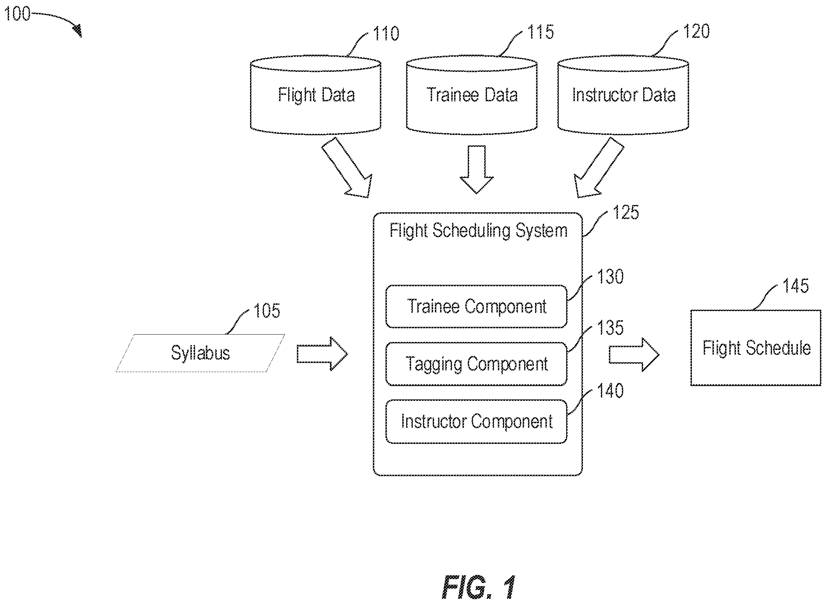

Figure 1 depicts an example workflow 100 for automated training flight scheduling.

In the illustrated workflow 100, a flight scheduling system 125 accesses a variety of data to generate an optimized flight schedule 145 for training and/or certifying pilots. Although depicted as a discrete system for conceptual clarity, in aspects, the flight scheduling system 125 may be implemented as a component of a broader system, as a standalone system, and/or distributed across multiple systems, and may be implemented using hardware, software, or a combination of hardware and software.

As illustrated, the flight scheduling system 125 accesses a syllabus 105, and uses the syllabus 105 to generate the flight schedule 145. The syllabus 105 (also referred to in some aspects as a footprint) generally includes information relating to training and/or certifying pilots for one or more aircraft. In some aspects, as discussed above, the syllabus may specify a sequence of events (e.g., flights), where each event has a corresponding set of characteristics or information (e.g., attributes of the flight). For example the syllabus may specify that a trainee should first observe a flight in the aircraft, then pilot a flight (under supervision/assistance) less than a defined range (e.g., less than 500 miles), then pilot a flight over mountainous terrain and/or through unstable air, and the like.

In the illustrated example, the flight scheduling system 125 accesses the syllabus 105 from one or more external sources. As used herein, "accessing" data can generally include receiving it, requesting it, retrieving it, or otherwise gaining access to it. For example, the syllabus 105 may be retrieved from an external storage repository. In other aspects, the syllabus 105 may be maintained locally by the flight scheduling system 125.

As illustrated, the flight scheduling system 125 further accesses information including flight data 110, trainee data 115, and instructor data 120. Although depicted as residing in discrete and remote repositories for conceptual clarity, in aspects, the information in the flight data 110, trainee data 115, and instructor data 120 may be combined or distributed across any number and variety of repositories (or may be generated as needed, rather than stored), and may be accessed from remote systems, local components, or a combination of remote and local sources.

In the depicted workflow 100, the flight scheduling system 125 includes a trainee component 130, a tagging component 135, and an instructor component 140. Although these discrete components are depicted for conceptual clarity, in aspects, the operations of the trainee component 130, tagging component 135, and instructor component 140 may be combined or distributed across any number and variety of components, and may be implemented using hardware, software, or a combination of hardware and software.

In an aspect, the trainee component 130 can evaluate the syllabus 105 to assign trainee pilots to scheduled flights in accordance with the sequence of events that the syllabus 105 specifies. For example, the trainee component 130 may access the flight data 110 to identify scheduled or planned flights, as well as attributes or characteristics of each flight. These flight attributes, also referred to in some aspects as flight information, can generally include any characteristics of the scheduled flight. For example, the flight data 110 may indicate, for each respective planned flight, the time and/or distance duration, the origin and/or destination, the planned flight path, forecasted weather for the flight, the aircraft that will be used for the flight, and the like.

In some aspects, the trainee component 130 can evaluate the trainee data 115 to identify which trainee(s) still haves events that must be completed in order to complete certification. For example, the trainee component 130 may evaluate the trainee data 115 to identify current trainees. For each trainee, the trainee component 130 can then evaluate the trainee data 115 to determine which event(s) have been completed by each, as well as which event(s) remain to be completed by each.

In the illustrated example, to assign trainees to flights, the trainee component 130 may generally identify the next event in the syllabus 105 that the trainee has not satisfied (e.g., the next flight, in the training sequence, that the trainee has not performed). The trainee component 130 can then evaluate the flight data 110 to identify a set of scheduled flights that satisfy the syllabus (e.g., that meet the indicated distance requirement specified for the next event in the syllabus). The trainee component 130 can then assign the trainee to one of the flights in the identified set based on one or more scheduling criteria.

In aspects, the scheduling criteria can include a variety of considerations depending on the particular implementation. For example, in one aspect, the scheduling criteria include a preference to assign the trainee to a flight that departs from the location where the trainee already is (or is expected to be). That is, if the trainee resides in a given location (or is scheduled to fly to a given location before the next flight), the trainee component 130 may preferentially assign the trainee to flights that depart this location. As another example, the scheduling criteria may include factors such as cost minimizing (e.g., to assign the trainee to a flight that will incur the least cost), time optimizing (e.g., to schedule the trainee to the flight that is scheduled to occur soonest), and the like.

For example, the trainee component 130 may identify the current date and/or the date of the last-scheduled or performed flight for the trainee (e.g., the date when they completed or are expected to complete the current stage of the syllabus 105), and assign the trainee to the flight (from the set of alternatives) that is scheduled soonest (e.g., nearest in the future). That is, the trainee component 130 may seek to compress the training schedule such that the time or delay between training flights is minimized.

In an aspect, once the trainee component 130 has assigned the trainee to a flight (e.g., selected a flight from the set of alternatives to satisfy the next step of the syllabus), the trainee component 130 can identify the next step or event and iteratively assign the trainee to flights until the syllabus is complete. For example, if the trainee component 130 assigns a first flight occurring on a first date to satisfy a first event in the syllabus, the trainee component 130 may then identify a second flight on a second date (subsequent to the first date) that will satisfy a second event (subsequent to the first event) in the syllabus, and so on until all of the indicated events have a corresponding assigned flight for the trainee.

In some aspects, the trainee component 130 proceeds iteratively and processes each trainee individually. That is, the trainee component 130 may select a trainee, assign all of the needed flights to complete the syllabus 105 for the trainee, and then select and process the next trainee in turn. In at least one aspect, the trainee component 130 selects the trainees based on criteria such as seniority, ensuring that more senior trainees are assigned to flights first. In some aspects, the trainee component 130 can alternatively assign multiple trainees in parallel. For example, the trainee component 130 may assign each respective trainee to a respective flight to satisfy the first event in the syllabus 105, then assign each respective trainee to a respective second flight for the second event, and so on.

In some aspects, during or after assigning trainees to flights, the trainee component 130 may optionally validate/verify the assignments. For example, the trainee component 130 may confirm that the sequence of flights assigned for each trainee is valid (e.g., sequentially in time, with sufficient time between them to ensure each can be completed and/or that the trainee will be in the correct location to begin each flight, that the sequence satisfies the syllabus, and the like).

In the illustrated example, the tagging component 135 can tag each assigned flight (assigned by the trainee component 130) based on the syllabus 105. For example, when the trainee component 130 assigns a trainee to a flight, the tagging component 135 can tag the scheduled flight with relevant information from the syllabus 105 (e.g., indicating which event the flight is intended to satisfy, any particular requirements for the flight, and the like). In at least one aspect, the tagging component 135 tags the assigned flight to indicate the attributes or characteristics of any instructor(s) needed to satisfy the event in the syllabus 105. For example, the tags may indicate the number of instructors needed, the experienced needed (e.g., how many flights or flight-hours the instructor should possess in the aircraft), the role of the instructor for the flight (e.g., observer, secondary pilot, primary pilot, and the like) and any other relevant instructor attributes indicated in the syllabus 105.

In an aspect, the instructor component 140 can then use these tags (generated by the tagging component 135) to assign instructors to the scheduled flights as needed. For example, the instructor component 140 may select each flight having one or more trainee tags (e.g., scheduled flights to which a trainee has been assigned), and evaluate the tag(s) to identify a set of eligible instructors (e.g., in the instructor data 120) that can satisfy the tag requirements and be scheduled for the flight. In aspects, the instructor component 140 can use any number and variety of scheduling criteria to assigning instructors, such as their locations (e.g., scheduling instructors based on whether they are currently at (or are expected to be at) the origin location for the scheduled flight, instructor preference (e.g., where instructors may indicate preferences for flight types, durations, destinations, and the like), and the like. In some aspects, the instructor assignments are performed using a crew rostering system.

As illustrated, the flight scheduling system 125 then outputs the flight schedule 145. The flight schedule 145 generally includes, for each respective trainee, a respective sequence of scheduled flights (each with appropriate instructor(s)) to satisfy or complete the syllabus 105. In an aspect, as discussed above, the flight scheduling system 125 (or another system) can then use the flight schedule 145 to move trainee pilots through the training process quickly and efficiently, thereby certifying them for flight with reduced waste and expense.

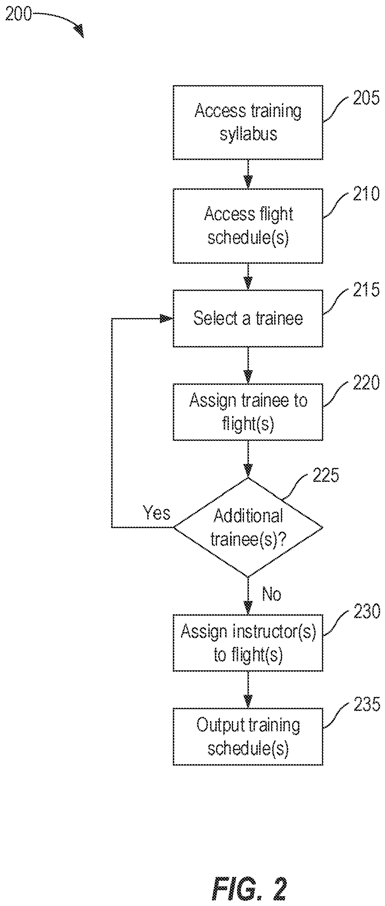

Figure 2 is a flow diagram depicting an example method 200 for generating automated training schedules. In some aspects, the method 200 is performed by a flight scheduling system, such as the flight scheduling system 125 of Figure 1.

At block 205, the flight scheduling system accesses a training syllabus (e.g., syllabus 105 of Figure 1). For example, as discussed above, the flight scheduling system may receive, retrieve, or otherwise access the syllabus to evaluate the flight(s) involved in certifying a trainee pilot. As discussed above, the syllabus generally includes a set or sequence of events (with or without specific ordering), where each event corresponds to some action or occurrence that should be completed before the trainee advances to the next stage and/or completes certification.

In some aspects, the flight scheduling system accesses the syllabus based on the trainee(s) being evaluated. For example, the flight scheduling system may be instructed to prepare training schedules for all trainees of a given aircraft type, and may therefore identify and retrieve the defined syllabus for the aircraft type.

At block 210, the flight scheduling system accesses a set of flight schedules (e.g., flight data 110 of Figure 1). The flight schedules generally include information relating to scheduled/future flights (or any other events relevant to the syllabus). For example, the flight schedule(s) may include a set of flights that are scheduled or planned to be performed by an organization (e.g., by an airline). For each scheduled flight, the flight scheduling system may include information or attributes such as the origin and/or destination, duration, distance, aircraft type, terrain, forecasted weather, and the like.

Generally, the flight schedules can include information about any number of flights for any period or window of time in the future. For example, the flight schedules may include information for flights scheduled to depart immediately (e.g., the same day0, within a week, within a month, and the like.

At block 215, the flight scheduling system selects a trainee. That is, the flight scheduling system selects an individual that is currently training (or desires to train) to operate the aircraft type that is associated with the accessed syllabus. In aspects, the flight scheduling system may select the trainee according to a variety of criteria, including randomly or pseudo-randomly. In at least one aspect, the flight scheduling system selects the trainee according to priority and/or seniority. That is, the flight scheduling system may select a most-senior trainee first, followed by the next-most-senior, and so on. Although the illustrated example depicts a sequential/iterative selection process (where the flight scheduling system selects and processes each trainee individually in sequence) for conceptual clarity, in some aspects, the flight scheduling system may select and/or process some or all of the trainees in parallel.

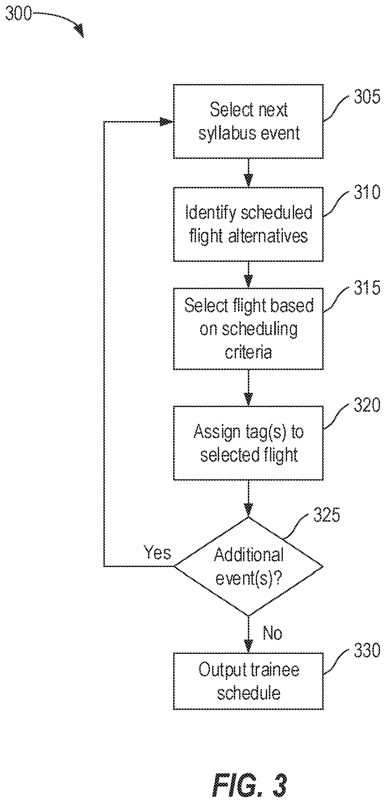

At block 220, the flight scheduling system assigns the selected trainee to one or more flights (indicated in the flight schedules) based on the training syllabus. For example, the flight scheduling system may identify the next event or step, in the syllabus, that the selected trainee needs to complete. The flight scheduling system can then identify one or more alternatives in the flight schedule(s) that will satisfy the identified step, and assign the trainee to one of these alternatives (e.g., by assigning the trainee to the alternative that is scheduled soonest to the current time or to the predicted completion date of the last step of the syllabus). One example method for assigning trainees to flights is described in more detail below with reference to Figure 3.

At block 225, the flight scheduling system determines whether there is at least one additional trainee (that still needs one or more flights assigned) remaining. That is, the flight scheduling system can determine whether there is at least one additional trainee, who is preparing for or training to operate the aircraft that corresponds to the accessed syllabus, who has not yet been assigned sufficient flights to complete the syllabus. If so, the method 200 returns to block 215. If not (e.g., if all current trainees have been assigned a sufficient set of flights that satisfy the requirements of the syllabus), the method 200 continues to block 230.

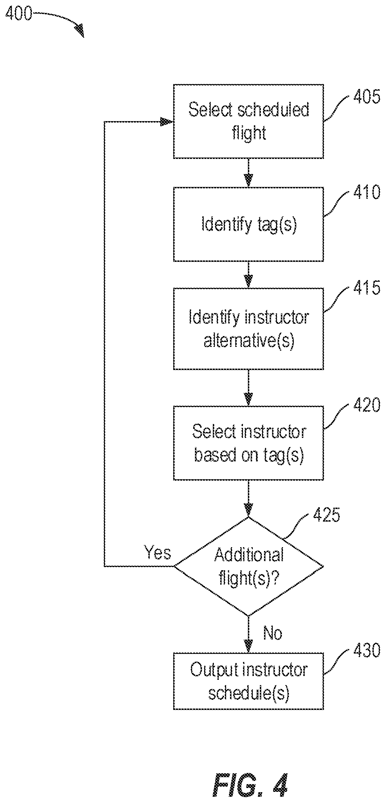

At block 230, the flight scheduling system assigns one or more instructors to each flight to which a trainee was assigned. For example, as discussed above, the flight scheduling system may evaluate tag(s) associated with the future flights to determine which flight(s) need one or more instructors, any required or preferred characteristics or attributes of the instructor(s) for each flight, and the like. One example method for assigning instructors to flights is discussed in more detail below with reference to Figure 4.

At block 235, the flight scheduling system then outputs the training schedule (e.g., one or more future scheduled flights with assigned trainee(s) and/or instructor(s)). In aspects, outputting the training schedule(s) can include a variety of operations, such as outputting the entire flight schedule (e.g., outputting all future/scheduled flights), outputting only the flights to which a trainee has been assigned, outputting the flights/schedule for a specific trainee, and the like. In aspects, "outputting" the schedule may include storing it, providing it to another system for use or storage, displaying it (e.g., via a graphical user interface (GUI)), implementing it (e.g., formally scheduling or finalizing the set of flights), providing it to another system or user for review and approval, and the like.

Figure 3 is a flow diagram depicting an example method 300 for assigning trainee pilot(s) to scheduled flights based on defined syllabi. In some aspects, the method 300 is performed by a flight scheduling system, such as the flight scheduling system 125 of Figure 1. In at least one aspect, the method 300 provides additional detail for block 220 of Figure 2.

At block 305, the flight scheduling system selects the next syllabus event in the accessed training syllabus. As used herein, the "next" event refers to the event that must be or should be completed next in order to progress the syllabus. For example, if the syllabus indicates that the trainee must complete flight A, followed by flight B, followed by flight C, the flight scheduling system can identify which flights (if any) have already been completed or scheduled, and select the next one in the sequence. For example, if the trainee has already completed flight A, the flight scheduling system may identify flight B as the next event. Similarly, if the trainee has already been assigned or scheduled to a flight to satisfy the flight B requirement, the flight scheduling system may identify flight C as the next event for the trainee.

In some aspects, if there are multiple "next" events (e.g., because two or more events may occur in any order or simultaneously), the flight scheduling system can use any suitable technique to select from among them (including randomly or pseudo-randomly).

At block 310, the flight scheduling system identifies a set of scheduled flight alternatives that may be used to satisfy the selected next event. In some aspects, the flight scheduling system may evaluate scheduled flight data or information (e.g., flight data 110 of Figure 1) to identify flights having characteristic(s) or attribute(s) that satisfy the attributes or tags of the selected next event (e.g., based on length, duration, destination, and the like). For example, depending on the label(s) of the next syllabus event, the flight scheduling system may identify flights greater than a defined distance threshold, flights that pass over defined terrain (e.g., mountainous terrain, snowy terrain, water terrain), and the like.

In some aspects, at block 310, the set of flight alternatives may also be narrowed in other ways. For example, the flight scheduling system may identify flights alternatives that are scheduled for some defined time in the future, such as those scheduled to occur at least a minimum time in the future (e.g., at least one day away from the current time or from the time of the previously-scheduled flight for the prior step of the syllabus), those scheduled to occur within a defined maximum time (e.g., within a month), and the like. In some aspects, the flight scheduling system can additionally or alternatively filter the set of flight alternatives based on other criteria, such as origin and/or destination. Generally, any suitable criteria may be used to identify the set of potential alternatives to which the trainee can be assigned. Additionally, in some aspects, some or all of the criteria may be used to select the flight (at block 315) rather than being used to filter the flight alternatives.

At block 315, the flight scheduling system selects a flight, from the set of scheduled flight alternatives, based on one or more scheduling criteria. In at least one aspect, as discussed above, the scheduling criteria indicates that time between flights in the training process should be minimized. For example, the flight scheduling system may identify the time and/or date of the flight that was assigned for the prior step in the syllabus (or the current time and/or date, if the selected step is the first step). The flight scheduling system can then identify and select the scheduled flight that occurs soonest after this time and/or date. This can allow the flight scheduling system to compress the training schedule and ensure that the trainee pilot completes the syllabus quickly and efficiently.

At block 320, the flight scheduling system assigns one or more tags to the selected flight. In one aspect, as discussed above, the tags can generally indicate information or requirements for the flight, as determined based on the syllabus (e.g., based on the selected next event). For example, the tag may indicate that a trainee will be on the flight, the identity of the trainee, any requirements or preferences of the trainee and/or the event (e.g., a minimum amount of experience or certification), and the like. The tags can generally be used to indicate any requirements, preferences, or other criteria for the flight, and can be used to assist in assigning instructors or otherwise managing the flight schedules.

At block 325, the flight scheduling system determines whether there is at least one event remaining in the syllabus for the trainee. That is, the flight scheduling system can determine whether the event selected at block 305 was the final event in the syllabus (e.g., the trainee is assigned to a complete flight schedule to complete training). If not (e.g., if at least one flight remains to be scheduled), the method 300 returns to block 305. If all events have been assigned for the trainee, the method 300 continues to block 330, where the flight scheduling system outputs the trainee schedule.

In an aspect, as discussed above, outputting the trainee schedule can include a variety of operations, including storing it, providing it to another system for storage, outputting it to a user (e.g., via a GUI), and the like. In some aspects, outputting the trainee schedule includes validating or verifying it. For example, the flight scheduling system may evaluate the schedule to ensure that it satisfies the requirements of the syllabus, that it is realistic (e.g., that it does not involve arriving at a first airport and departing from a second airport that is a long distance away and without sufficient time to get to the second airport), and the like. In some aspects, outputting the trainee schedule includes providing it to the trainee (e.g., allowing them to review and accept the proposed schedule), to an instructor or other user (e.g., allowing them to review and accept the schedule), and the like.

Figure 4 is a flow diagram depicting an example method 400 for assigning instructor pilot(s) to scheduled flights based on defined syllabi. In some aspects, the method 400 is performed by a flight scheduling system, such as the flight scheduling system 125 of Figure 1. In at least one aspect, the method 400 provides additional detail for block 230 of Figure 2.

At block 405, the flight scheduling system selects a scheduled flight to which at least one trainee was assigned. In aspects, the flight scheduling system can use any suitable technique to select the flight, as all flights will be evaluated in turn. In some aspects, the flight scheduling system selects a scheduled flight (regardless of whether a trainee was assigned to it) and evaluates the tags or labels to determine whether a trainee is assigned to the flight. If not, the flight scheduling system may discard it and select another (or may proceed using conventional scheduling systems to assign a crew to the flight). Although the illustrated example depicts a sequential and iterative process (where the flight scheduling system selects and processes each scheduled individually in sequence) for conceptual clarity, in some aspects, the flight scheduling system may select and/or process some or all of the scheduled flights in parallel.

At block 410, the flight scheduling system identifies any tag(s) (or other labels, metadata, or other data structure) that are associated with the selected flight. For example, as discussed above, the tags may be used to indicate attributes of the instructor(s) needed for the flight, such as their experience, certifications, and the like.

At block 415, the flight scheduling system identifies a set of alternative or potential instructors that could be used to satisfy the tag requirements. For example, the flight scheduling system may identify instructors that are not already scheduled for a flight at the same time and that possess the indicated attributes.

At block 420, the flight scheduling system then selects an instructor for the selected flight based at least in part on the tags (e.g., one that satisfies the tag criteria). In aspects, the flight scheduling system may use a variety of techniques to select and assign the instructor to the flight. For example, in one aspect, the flight scheduling system can use a random or pseudo-random selection. In some aspects, the flight scheduling system considers instructor seniority or priority. In at least one aspect, the flight scheduling system selects the instructor based at least in part on instructor preference. For example, if one instructor has expressed a preference to fly to a given destination and the selected flight is to this destination, the flight scheduling system may select this instructor to assign.

At block 425, the flight scheduling system determines whether there is at least one additional flight to which an instructor has not-yet been assigned. If so, the method 400 returns to block 405. If not, the method 400 continues to block 430, where the instructor schedule is output.

In an aspect, as discussed above, outputting the instructor schedule can include a variety of operations, including storing it, providing it to another system for storage, outputting it to a user (e.g., via a GUI), and the like. In some aspects, outputting the instructor schedule includes providing it to the trainee (e.g., allowing them to review their assigned instructors), to the assigned instructor(s) or other user (e.g., allowing them to review and accept the schedule), and the like.

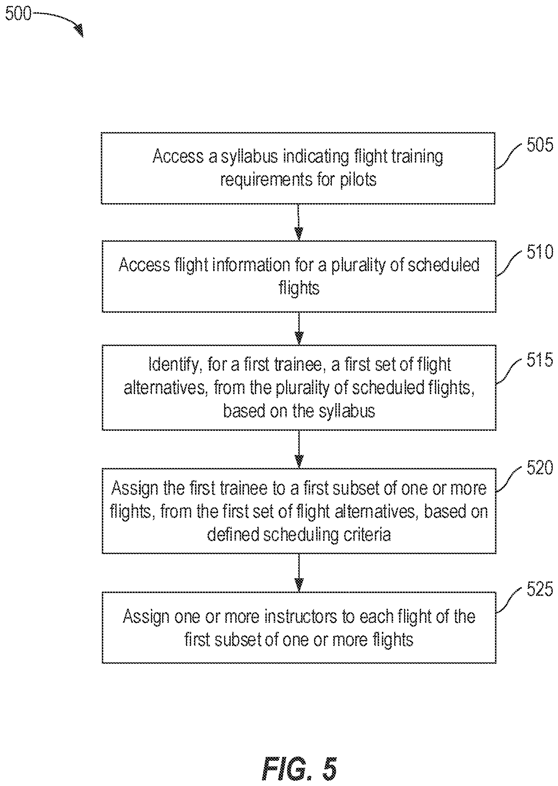

Figure 5 is a flow diagram depicting an example method 500 for generating training schedules. In some aspects, the method 500 is performed by a flight scheduling system, such as the flight scheduling system 125 of Figure 1.

At block 505, a syllabus (e.g., syllabus 105 of Figure 1) indicating flight training requirements for pilots is accessed.

At block 510, flight information for a plurality of scheduled flights (e.g., flight data 110 of Figure 1) is accessed.

At block 515, a first set of flight alternatives, from the plurality of scheduled flights, is identified, for a first trainee (e.g., from trainee data 115 of Figure 1), based on the syllabus.

At block 520, the first trainee is assigned to a first subset of one or more flights, from the first set of flight alternatives, based on defined scheduling criteria (e.g., to create flight schedule 145 of Figure 1).

At block 525, one or more instructors (e.g., from instructor data 120 of Figure 1) are assigned to each flight of the first subset of one or more flights.

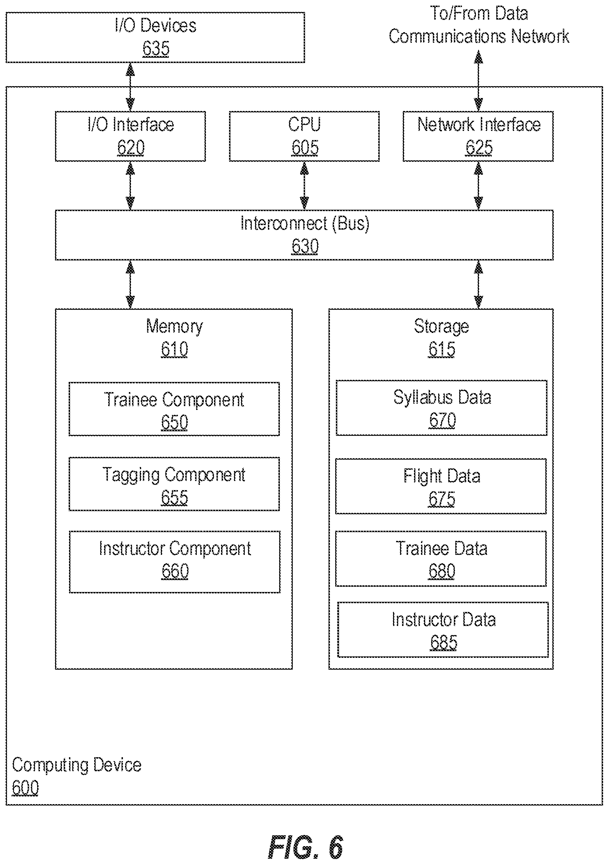

Figure 6 depicts an example computing device 600, according to one or more aspects of the present disclosure. Although depicted as a physical device, in aspects, the computing device 600 may be implemented using virtual device(s), and/or across a number of devices (e.g., in a cloud environment). In one aspect, the computing device 600 corresponds to a flight scheduling system, such as the flight scheduling system 125 of Figure 1.

As illustrated, the computing device 600 includes a CPU 605, memory 610, storage 615, a network interface 625, and one or more I/O interfaces 620. In the illustrated aspect, the CPU 605 retrieves and executes programming instructions stored in memory 610, as well as stores and retrieves application data residing in storage 615. The CPU 605 is generally representative of a single CPU and/or GPU, multiple CPUs and/or GPUs, a single CPU and/or GPU having multiple processing cores, and the like. The memory 610 is generally included to be representative of a random access memory. Storage 615 may be any combination of disk drives, flash-based storage devices, and the like, and may include fixed and/or removable storage devices, such as fixed disk drives, removable memory cards, caches, optical storage, network attached storage (NAS), or storage area networks (SAN).

In some aspects, I/O devices 635 (such as keyboards, monitors, etc.) are connected via the I/O interface(s) 620. Further, via the network interface 625, the computing device 600 can be communicatively coupled with one or more other devices and components (e.g., via a network, which may include the Internet, local network(s), and the like). As illustrated, the CPU 605, memory 610, storage 615, network interface(s) 625, and I/O interface(s) 620 are communicatively coupled by one or more buses 630.

In the illustrated aspect, the memory 610 includes a trainee data component 650, a tagging component 655, and an instructor component 660, which may perform one or more aspects discussed above. Although depicted as discrete components for conceptual clarity, in aspects, the operations of the depicted components (and others not illustrated) may be combined or distributed across any number of components. Further, although depicted as software residing in memory 610, in aspects, the operations of the depicted components (and others not illustrated) may be implemented using hardware, software, or a combination of hardware and software.

In one aspect, the trainee component 650 (which may correspond to the trainee component 130 of Figure 1) is used to evaluate training syllabi and assign trainees to scheduled flights in order to complete the syllabi, as discussed above. The tagging component 655 (which may correspond to the tagging component 135 of Figure 1) may be used to tag scheduled flights based on the assigned trainee(s) and/or based on the syllabi, as discussed above. The instructor component 660 (which may correspond to the instructor component 140 of Figure 1) may be used to assign instructors to scheduled flights (e.g., based on assigned tags), as discussed above.

In the illustrated example, the storage 615 includes syllabus data 670 (which may correspond to the syllabus 105 of Figure 1). The storage 615 also includes flight data 675 (which may correspond to the flight data 110 of Figure 1), trainee data 680 (which may correspond to the trainee data 115 of Figure 1), and instructor data 685 (which may correspond to the instructor data 120 of Figure 1). Although depicted as residing in storage 615, the syllabus data 670, flight data 675, trainee data 680, and instructor data 685 may be stored in any suitable location, including memory 610.

As discussed above, the computing device 600 may generally use the stored data to assign trainees and instructors to scheduled flights in accordance with training regimens. For example, the computing device 600 (e.g., the trainee component 650) may evaluate the syllabus data 670 to identify flight events, and assign trainees (e.g., from the trainee data 680) to specific scheduled flights (e.g., from the flight data 675) in order to satisfy the syllabus data 670. The tagging component 655 may tag these scheduled flights based on the requirements indicated in the syllabus, and the instructor component 660 may assign instructors (e.g., from the instructor data 685) to these flights based at least in part on the assigned tags.

In the current disclosure, reference is made to various aspects. However, it should be understood that the present disclosure is not limited to specific described aspects. Instead, any combination of the following features and elements, whether related to different aspects or not, is contemplated to implement and practice the teachings provided herein. Additionally, when elements of the aspects are described in the form of "at least one of A and B," it will be understood that aspects including element A exclusively, including element B exclusively, and including element A and B are each contemplated. Furthermore, although some aspects may achieve advantages over other possible solutions and/or over the prior art, whether or not a particular advantage is achieved by a given aspect is not limiting of the present disclosure. Thus, the aspects, features, aspects and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, aspects described herein may be embodied as a system, method or computer program product. Accordingly, aspects may take the form of an entirely hardware aspect, an entirely software aspect (including firmware, resident software, micro-code, etc.) or an aspect combining software and hardware aspects that may all generally be referred to herein as a "circuit," "module" or "system." Furthermore, aspects described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to aspects of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various aspects of the present disclosure. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

While the foregoing is directed to aspects of the present disclosure, other and further aspects of the disclosure may be devised without departing from the basic scope thereof, and the scope thereof is determined by the claims that follow.

## Claims

1. A method, comprising:
accessing a syllabus (105) indicating flight training requirements for pilots;
accessing flight information (110) for a plurality of scheduled flights;
identifying, for a first trainee (115), a first set of flight alternatives, from the plurality of scheduled flights, based on the syllabus;
assigning, by operation of one or more computer processors (125), the first trainee to a first subset of one or more flights, from the first set of flight alternatives, based on defined scheduling criteria; and
assigning one or more instructors (120) to each flight of the first subset of one or more flights.

2. The method of claim 1, wherein:
the syllabus (105) comprises a sequence of events for flight training for pilots, and
each respective event in the sequence of events comprises respective flight information (110) describing a respective flight that trainee pilots must complete during training.

3. The method of claim 2, wherein assigning the first trainee to the first subset of one or more flights comprises:
selecting a first flight, from the first set of flight alternatives (110), based on a first event in the sequence of events;
assigning the first trainee to the first flight;
selecting a second flight, from the first set of flight alternatives, based on a second event in the sequence of events, wherein the second flight is subsequent to the first flight; and
assigning the first trainee to the second flight.

4. The method of any preceding claim, wherein the defined scheduling criteria (105) indicates to minimize time between flights in the first subset of one or more flights.

5. The method of any preceding claim, further comprising, subsequent to assigning the first trainee to the first subset of one or more flights:
identifying, for a second trainee (115), a second set of flight alternatives (110), from the plurality of scheduled flights, based on the syllabus (105); and
assigning the second trainee to a second subset of one or more flights, from the second set of flight alternatives, based on defined scheduling criteria.

6. The method of any preceding claim, further comprising tagging each respective flight in the first subset of one or more flights (110) based on the syllabus (105).

7. The method of claim 6, wherein assigning the one or more instructors (120) comprises, for each respective flight of the first subset of one or more flights (110):
identifying a respective tag associated with the respective flight;
identifying a respective set of instructor alternatives, from a plurality of instructor alternatives, based on the respective tag; and
assigning a respective instructor, from the respective set of instructor alternatives, to the respective flight.

8. A system, comprising:
a processor (605);
a memory storage device (610) including instructions that when executed by the processor enable performance of an operation comprising:
accessing a syllabus (105) indicating flight training requirements for pilots;
accessing flight information (110) for a plurality of scheduled flights;
identifying, for a first trainee (115), a first set of flight alternatives, from the plurality of scheduled flights, based on the syllabus;
assigning the first trainee to a first subset of one or more flights, from the first set of flight alternatives, based on defined scheduling criteria; and
assigning one or more instructors (120) to each flight of the first subset of one or more flights.

9. The system of claim 8, wherein:
the syllabus (105) comprises a sequence of events for flight training for pilots, and
each respective event in the sequence of events comprises respective flight information (110) describing a respective flight that trainee pilots must complete during training.

10. The system of claim 9, wherein assigning the first trainee to the first subset of one or more flights comprises:
selecting a first flight, from the first set of flight alternatives (110), based on a first event in the sequence of events;
assigning the first trainee to the first flight;
selecting a second flight, from the first set of flight alternatives, based on a second event in the sequence of events, wherein the second flight is subsequent to the first flight; and
assigning the first trainee to the second flight.

11. The system of any of claims 8 to 10, wherein the defined scheduling criteria (105) indicates to minimize time between flights in the first subset of one or more flights.

12. The system of any of claims 8 to 11, the operation further comprising, subsequent to assigning the first trainee to the first subset of one or more flights:
identifying, for a second trainee (115), a second set of flight alternatives (110), from the plurality of scheduled flights, based on the syllabus (105); and
assigning the second trainee to a second subset of one or more flights, from the second set of flight alternatives, based on defined scheduling criteria.

13. The system of any of claims 8 to 12, the operation further comprising tagging each respective flight in the first subset of one or more flights (110) based on the syllabus (105).

14. The system of claim 13, wherein assigning the one or more instructors comprises, for each respective flight of the first subset of one or more flights:
identifying a respective tag associated with the respective flight;
identifying a respective set of instructor alternatives, from a plurality of instructor alternatives, based on the respective tag; and
assigning a respective instructor, from the respective set of instructor alternatives, to the respective flight.

15. A computer program product, the computer program product comprising a computer-readable storage medium having computer-readable program code embodied therewith, the computer-readable program code executable by one or more computer processors to perform the method of any of claims 1 to 7.
